# EUROPÄISCHE PATENTSCHRIFT

(11) **EP 3 019 661 B1**
(45) Veröffentlichungstag und Bekanntmachung des Hinweises auf die Patenterteilung: **21.06.2017**
(21) Anmeldenummer: 14734838.7
(22) Anmeldetag: 04.07.2014
(51) Int. Cl.: D21H 27/00, C09D 129/04, C09J 7/04, C08G 77/42, C08G 77/48, C08G 77/50, D21H 17/34, D21H 17/36, D21H 17/46, D21H 17/59, D21H 19/60, D21H 19/62, C09D 183/10, C08G 77/12, C08G 77/20, C08G 77/442, C08L 83/04, D21H 19/32

(54) **IMPRÄGNIERUNGSMATERIALIEN FÜR RELEASE-PAPIERE**
IMPREGNATING MATERIALS FOR RELEASE PAPERS
MATÉRIAUX D'IMPRÉGNATION POUR PAPIERS ANTIADHÉSIFS

(30) Priorität: 10.07.2013 DE 102013107329
(43) Veröffentlichungstag der Anmeldung: 18.05.2016
(73) Patentinhaber: Kuraray Europe GmbH, 65795 Hattersheim (DE)
(72) Erfinder: MICHEL, Samuel, 55130 Mainz (DE); DUDEK, Eva, 65239 Hohheim (DE)
(74) Vertreter: Kisters, Michael Marcus
(86) Internationale Anmeldenummer: PCT/EP2014/064314
(87) Internationale Veröffentlichungsnummer: WO 2015/004017

(56) Entgegenhaltungen:
- EP-A2- 0 097 333
- DE-A1- 19 646 642

## Beschreibung

Die Erfindung betrifft ein Verfahren zur Imprägnierung von cellulosebasierendem Material, insbesondere von Papier unter Verwendung von Polyvinylalkohol enthaltend olefinische Doppelbindungen.

### Technisches Gebiet

Zur Herstellung von sogenannten Release-Papieren ist es seit langem bekannt, Papierträger mit einer Silikonschicht auszustatten, wodurch diese dehäsive Eigenschaften erhalten.

Die direkte Auftragung der Silikonschichten auf dem Papierträger d. h. direkt auf die Zellulosefasern ist schwierig und führt zu unbefriedigenden Releaseeigenschaften. Da die meisten Papiere Polyvinylalkohol als Grundierungsmittel enthalten und die Anbindung der Silikonschicht an diese Polymere einfacher verläuft sind, hierzu bereits eine Reihe von Verfahren zur Silikonisierung von Papieroberflächen über Polyvinylalkohol etabliert.

So schlägt die EP 1625254 A1 zu diesem Zweck die Umsetzung eines silanhaltigen Polyvinylalkohols mit einem vinylterminierten Polysiloxan und einem H-haltigen Siloxan vor. Der verwendete silanhaltige Polyvinylalkohol enthält Si-Gruppen in der Hauptkette des Polymers und ist aus der Copolymerisation von einem oder mehreren Vinylestern mit einem silanhaltigen olefinisch ungesättigten Monomeren erhältlich. Nachteilig an diesem Verfahren ist, dass der silanhaltige Polyvinylalkohol aufwendig herzustellen ist und die Anbindung des Silikonöls an dieses Grundierungsmittel nicht über chemische, sondern physikalische Wechselwirkungen (Wasserstoffbrücke) erfolgt. Im Resultat ist die erhaltene Imprägnierungsschicht mechanisch unzureichend.

Aus WO 2009/147283 A1 ist bekannt, acetalsiserte Polyvinylalkohole mit Si-Guppen in einer Seitenkette als Imprägnierungsmittel einzusetzen. Solche silanhaltigen Polyvinylacetale sind durch Acetalisierung von Polyvinylalkohol mit entsprechend silans-substituierten Ketonen oder Aldehyden erhältlich. Die Herstellung von silanmodifizierten Aldehyden oder Ketonen ist sehr aufwendig und deren Umsetzung mit Polyvinylalkohol insbesondere von bereits in Papier eingebrachten Polyvinylalkoholen schwierig. Die Umsetzung dieser silanmodifizierten Polyvinylalkohols mit Vernetzer und Sililkonöl erfolgt über Wasserstoffbrückenbindungen, so dass auch hier eine ebenfalls mechanisch unbefriedigende Beschichtung resultiert.

Es bestand daher die Aufgabe ein Verfahren zur Imprägnierung von Imprägnierung von cellulosebasierendem Material, insbesondere zur Herstellung von Release-Papieren bereit zu stellen, das mechanisch und chemisch beständige Beschichtungen liefert und die Bereitstellung von silanmodifizierten Polyvinylalkoholen vermeidet.

Überraschenderweise wurde festgestellt, dass Polyvinylalkohole mit olefinisch ungesättigten C-C-Doppelbindungen ausgestattet werden können und diese Doppelbindungen zur chemischen Anbindung von Siloxanvernetzern verwendet werden können. Mit diesem Verfahren ist es möglich, Oberflächen, auf die ein solcher modifizierter Polyvinylalkohol aufgebracht wurde, mit Siloxanverbindungen zu imprägnieren, was insbesondere für Papieroberflächen zu sogenannten Release-Papieren führt.

Gegenstand der vorliegenden Erfindung ist daher ein Imprägnierungsmittel, erhältlich durch Umsetzung von Polyvinylalkohol enthaltend olefinische C-C-Doppelbindungen mit einem Silan-gruppen enthaltenden Vernetzer und einer Silikonverbindung enthaltend olefinische C-C-Doppelbindungen. Die Umsetzung wird insbesondere durch Platin-, Paladium- oder Rhodiumsalze oder -komplexe katalysiert. Bevorzugt werden Komplexe aus Platin und Olefinen verwendet da die Umsetzung hiermit bei Raumtemperatur katalysiert werden kann. Platinkomplexe enthaltend Stickstoffverbindungen wie Pyridin, Benzonitril oder Benzotriazol katalysieren die Umsetzung bei erhöhter Temperatur.

Bevorzugt enthält der Polyvinylalkohol die olefinische C-C-Doppelbindungen in der Hauptkette. Verbindungen dieser Art sind z.B. durch thermische Behandlung von Polyvinylalkohol erhältlich. Polyvinylalkohol mit olefinischen C-C-Doppelbindungen in der Hauptkette werden unter dem Typbezeichnung Poval L8, L9 oder L10 von der Kuraray Europe GmbH angeboten

Bevorzugt werden Verbindungen der allgemeinen Formel I eingesetzt: 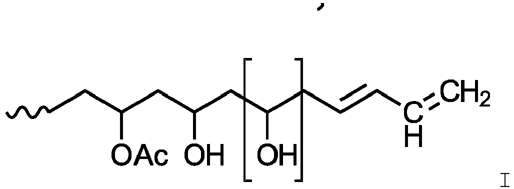 mit n = 100-3000

Alternativ kann der Polyvinylalkohol olefinische C-C-Doppelbindungen in Seitenketten enthalten. Verbindungen dieser Art sind durch Copolymerisation von Vinylacetat mit Divinylethern zB gemäß der folgenden Reaktionsgleichung erhältlich:

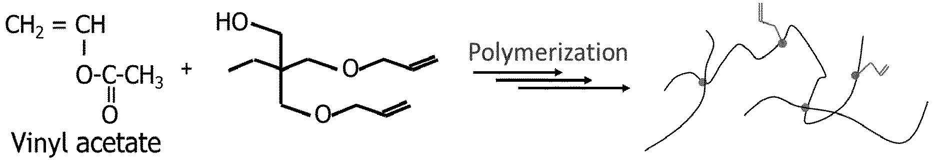

In beiden Varianten beträgt der Hydrolysegrad der Polyvinylalkohole 90-99 Mol% und der Anteil an olefinischen C-C-Doppelbindungen 0,01- 5% Mol%.

Bevorzugt werden im erfindungsgemäßem Imprägnierungsmittel als Silan-gruppen enthaltender Vernetzer Verbindungen der allgemeinen Formel II eingesetzt

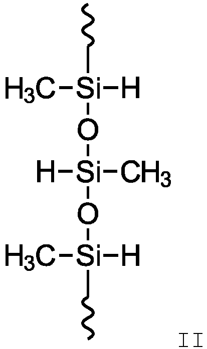

Bevorzugt werden im erfindungsgemäßen Imprägnierungsmittel als Silikonverbindung enthaltend olefinische C-C-Doppelbindungen Verbindungen der allgemeinen Formel III eingesetzt:

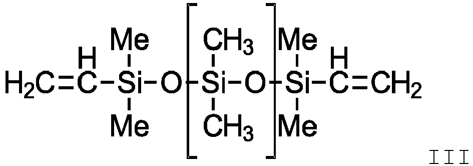

Die Umsetzung der Silikonverbindung enthaltend olefinische C-C-Doppelbindungen mit dem Silan-gruppen enthaltender Vernetzter führt zu einem Zwischenprodukt, beispielhaft skizziert in der allgemeinen Formel IV

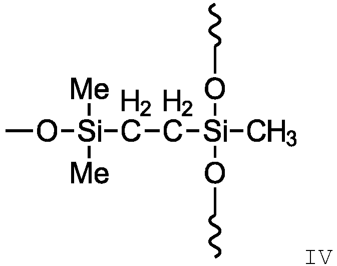

Dieses Zwischenprodukt wird anschließend mit dem Polyvinylalkohol enthaltend olefinische C-C-Doppelbindungen zum Imprägnierungsmittel umgesetzt, beispielhaft skizziert in der allgemeinen Formel V.

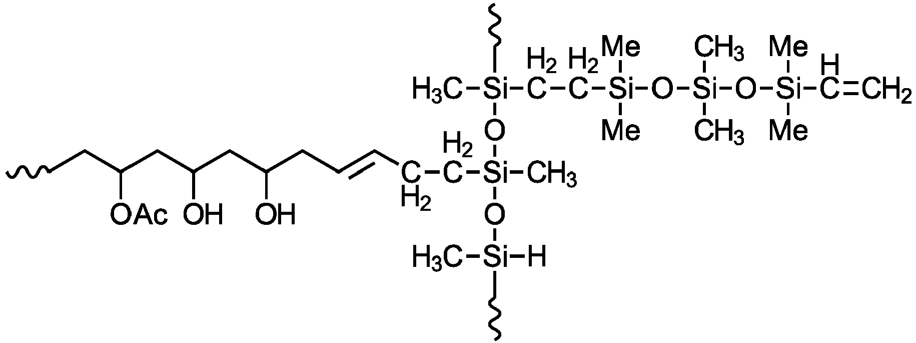

Bevorzugte Substrate für das erfindungsgemäße Verfahren sind cellulosebasierende Materialien, die aus Papier oder Pappe bestehen.

Es ist ebenfalls Gegenstand der vorliegenden Erfindung ein Verfahren zur Imprägnierung von cellulosebasierendem Material durch Auftragen eines Imprägnierungsmittels, erhältlich durch Umsetzung von Polyvinylalkohol enthaltend olefinische C-C-Doppelbindungen mit einem Silan-gruppen enthaltenden Vernetzter und einer Silikonverbindung enthaltend olefinische C-C-Doppelbindungen.

Das erfindungsgemäße Verfahren wird bevorzugt so durchgeführt das Polyvinylalkohol enthaltend olefinische C-C-Doppelbindungen auf ein cellulosebasierendes Material aufgetragen wird und anschließend mit einem Silan-gruppen enthaltenden Vernetzer und einer Silikonverbindung enthaltend olefinische C-C-Doppelbindungen umgesetzt wird.

Alle für das Imprägnierungsmittels beschriebenen Ausführungsvarianten können auch im erfindungsgemäßen Verfahren eingesetzt werden.

### Beispiele

Die verwendeten Polyvinylalkohole wurden in einer Dampflösestation bei 98°C ca. 40 min gelöst und im Anschluss filtriert, um eventuell ungelöste Teilchen zu entfernen. Handelsübliche 80g/m2 Papieren wurden mit einem Grundstrich aus K - Control-Coater K202 der Firma Erikson ausgestattet. Anschließend wurde die PVA-Lösungen mittels Rakel aufgetragen und das beschichtete Papier mit einem Trockenband der Firma Dow 2-mal bei 130°C getrocknet. Dann wurde bei 120°C 2 min im Trockenschrank nachgetrocknet, um das Flächengewicht zu bestimmen. Die beschichteten Papiere wurden mit einer Bügelpresse 1 min bei 100°C vorgeglättet. Im Anschluss daran wurden die Papier bei 50°C und 85% rel. Luft 24h rückgefeuchtet um sie dann bei 1,8 kN/cm 80°C 2 nips zu kalandrieren.

Das so erhaltene Papier wurde im Laborverfahren silikonisiert. Bei der Herstellung der Abmischung ist auf die Dosierreihenfolge zu achten. Die Silikonisierung der Papiere erfolgte mit einem K-Control Coater K202 der Firma Erikson mittels Drahtrakel.

Um das gewünschten Flächengewicht einzustellen wurde die Silikonmischung mit einem geeigneten Lösemittel (ICP solvent CAS 64742-47-8) verdünnt. Das Papier wurde 2 mal durch die Trockenstrecke bei 168°C gesendet. Anschließend wurde das Flächengewicht nach Trocknung (bei 120°C 2 min im Trockenschrank) bestimmt.

Es wurden Papiere mit den folgenden Beschichtungen hergestellt:

| Versuch | Zusammensetzung |
|---|---|
| A | 100 GT Mowiol 15-99, Polyvinylalkohol der Kuraray Europe GmbH ohne olefinische Doppelbindungen, nicht erfindungsgemäß |
| B | 100 GT KRE-509, Polyvinylalkohol der Kuraray Europe GmbH mit 0,35mol% olefinischen Doppelbindungen und einem Polymerisationsgrad von 1000, erfindungsgemäß |

| Versuch | Zusammensetzung |
|---|---|
| C | 100 GT Mowiol 15-99 |
| | 100 GT Silicoleas Resin 11362 |
| | 5 GT Silicoleas Vernetzer 12031 |
| | 5 GT Silicoleas Katalysator 12070 |

| Versuch | Zusammensetzung |
|---|---|
| D | 100 GT KRE-509 |
| | 100 GT Silicoleas Resin 11362 |
| | 5 GT Silicoleas Vernetzer 12031 |
| | 5 GT Silicoleas Katalysator 12070 |

Die Silikonauftragsmenge betrug 2 bzw. 3 g/m².

Die nun mit dem Deckstrich ausgerüsteten Papiere wurden mit einer Bügelpresse 1 min bei 100°C geglättet.

Der erste "rub off -Test" wird sofort nach dem Bügeln durchgeführt. Im Anschluss daran wird das Papier bei 23°C und 50%rel. **Luftfeuchte** gelagert und der Test nach 1Tag, 1 Woche und anschließend wöchentlich 8 Wochen lang durchgeführt.

Die Prüfung wird wie folgt durchgeführt:
Es wird mit dem Finger 10 mal über den Silikonfilm gerieben, der Druck sollte so gewählt werden, dass sich der Finger deutlich erwärmt. Eine Beschädigung der Silikonbeschichtung zeigt sich in Form von abgeriebenen Wülsten (rub-off) und an matten Stellen (smear), wenn man das geprüfte Papier unter einer schrägen Lichtquelle betrachtet.

Tabelle 1 zeigt, dass mit Polyvinylalkoholen enthaltend olefinische Doppelbindungen eine mechanisch deutlich Silikonverankerung erhalten wird. Dies führt zu einer deutlichen Verbesserung des rub-offs und damit der Adhäsion des Silikons am Papier.

Als zusätzliche Beurteilung der mechanischen Beanspruchung der Papieroberfläche wurde die geprüfte Fläche mit PVA-Nachweisreagenzien (Jod-Jod-Kali-Lösung) behandelt, um so über die Einfärbe-Intensität des Papieres eine Aussage zur Stabilität der Silikonverankerung zu machen. Je mechanisch stabiler die Silikonbeschichtung desto mehr wird der Polyvinylalkohol-Grundstrich abgedeckt und desto geringer die Färbung.

Tabelle 2 zeigt, **dass** die erfindungsgemäß verwendeten Polyvinylalkohole eine mechanisch deutlich resistentere Silikonverankerung ermöglichen.

**Tabelle 1**

| Versuch | | sofort | 1 Tag | 1 Woche | 2 Wochen | 3 Wochen | 4 Wochen | 5 Wochen | 6 Wochen | 7 Wochen | 8 Wochen | 9 Wochen |
|---|---|---|---|---|---|---|---|---|---|---|---|---|
| A | | 1 | 1 | 1 | 1 | 1 | 1 | 1 | 1 | 1 | 1 | 1 |
| B | | 1 | 1 | 1 | 1 | 1 | 1 | 1 | 1 | 1 | 1 | 1 |
| C | 2 | 1 | 1 | 1 | 1 | 1 | 1 | 2 | 2 | 3 | 3 | 3 |
| C | 3 | 1 | 1 | 1 | 1 | 1 | 1 | 2 | 2 | 3 | 3 | 3 |
| D | 2 | 1 | 1 | 1 | 1 | 1 | 1 | 1 | 1 | 1 | 1 | 1 |
| D | 3 | 1 | 1 | 1 | 1 | 1 | 1 | 1 | 1 | 1 | 1 | 1 |

| | | | | | | | | | | | | |
|---|---|---|---|---|---|---|---|---|---|---|---|---|
| 1= wenig rub off, 2= geringer rub off, 3= starker rub off | | | | | | | | | | | | |

**Tabelle 2**

| Versuch | | sofort | 1 Tag | 1 Woche | 2 Wochen | 3 Wochen | 4 Wochen | 5 Wochen | 6 Wochen | 7 Wochen | 8 Wochen | 9 Wochen |
|---|---|---|---|---|---|---|---|---|---|---|---|---|
| A | | 3 | 3 | 3 | 3 | 3 | 3 | 3 | 3 | 3 | 3 | 3 |
| B | | 3 | 3 | 3 | 3 | 3 | 3 | 3 | 3 | 3 | 3 | 3 |
| C | 2 | 1 | 1 | 1 | 1 | 1 | 1 | 2 | 2 | 3 | 3 | 3 |
| C | 3 | 1 | 1 | 1 | 1 | 1 | 1 | 2 | 2 | 3 | 3 | 3 |
| D | 2 | 1 | 1 | 1 | 1 | 1 | 1 | 1 | 1 | 1 | 1 | 1 |
| D | 3 | 1 | 1 | 1 | 1 | 1 | 1 | 1 | 1 | 1 | 1 | 1 |

| | | | | | | | | | | | | |
|---|---|---|---|---|---|---|---|---|---|---|---|---|
| 1= keine Einfärbung, 2= geringer Einfärbung, 3= starker Einfärbung | | | | | | | | | | | | |

## Patentansprüche

1. Imprägnierungsmittel, erhältlich durch Umsetzung von Polyvinylalkohol enthaltend olefinische C-C-Doppelbindungen mit einem Silan-gruppen enthaltenden Vernetzter und einer Silikonverbindung enthaltend olefinische C-C-Doppelbindungen.

2. Imprägnierungsmittel nach Anspruch 1, **dadurch gekennzeichnet, dass** der Polyvinylalkohol olefinische C-C-Doppelbindungen in der Hauptkette enthält.

3. Imprägnierungsmittel nach **Anspruch 1** oder 2 **dadurch gekennzeichnet dass** als Polyvinylalkohol olefinische C-C-Doppelbindungen Verbindungen der allgemeinen Formel I eingesetzt werden 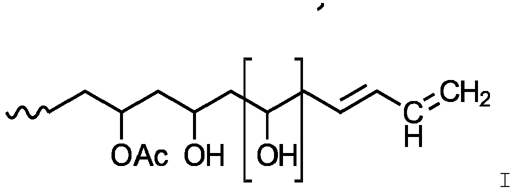 mit n = 100-3000.

4. Imprägnierungsmittel nach Anspruch 1, **dadurch gekennzeichnet, dass** der Polyvinylalkohol olefinische C-C-Doppelbindungen in Seitenketten enthält.

5. Imprägnierungsmittel nach einem der Ansprüche 1 - 4 **dadurch gekennzeichnet, dass** als Silan-gruppen enthaltenden Vernetzter Verbindungen der allgemeinen Formel II eingesetzt werden

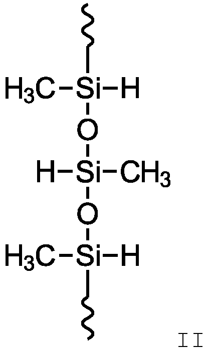

6. Imprägnierungsmittel nach einem der Ansprüche 1 - 5 **dadurch gekennzeichnet, dass** als Silikonverbindung enthaltend olefinische C-C-Doppelbindungen Verbindungen der allgemeinen Formel III eingesetzt werden

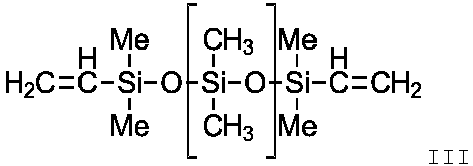

7. Verfahren zur Imprägnierung von cellulosebasierendem Material durch Auftragen eines Imprägnierungsmittels, erhältlich durch Umsetzung von Polyvinylalkohol enthaltend olefinische C-C-Doppelbindungen mit einem Silan-gruppen enthaltenden Vernetzter und einer Silikonverbindung enthaltend olefinische C-C-Doppelbindungen.

8. Verfahren nach Anspruch 7 **dadurch gekennzeichnet** das Polyvinylalkohol enthaltend olefinische C-C-Doppelbindungen auf ein cellulosebasierendes Material aufgetragen wird und anschließend mit einem Silan-gruppen enthaltenden Vernetzter und einer Silikonverbindung enthaltend olefinische C-C-Doppelbindungen umgesetzt wird.

9. Verfahren nach Anspruch 7 oder 8, **dadurch gekennzeichnet, dass** die Umsetzung durch Platin-, Paladium- oder Rhodiumsalze oder -komplexe katalysiert wird.

10. Verfahren nach einem der Ansprüche 7 bis 9, **dadurch gekennzeichnet, dass** als cellulose-basierendes Material Papier oder Pappe eingesetzt wird.

## Claims

1. An impregnating agent, obtained by reacting poly-vinyl alcohol containing olefinic C-C double bonds with a cross-linking agent containing silane groups and a silicone compound containing olefinic C-C double bonds.

2. The impregnating agent according to claim 1, **characterized in that** the polyvinyl alcohol contains olefinic C-C double bonds in the main chain.

3. The impregnating agent according to claim 1 or 2, **characterized in that**, as polyvinyl alcohol, olefinic C-C double bond compounds of the general Formula I are used 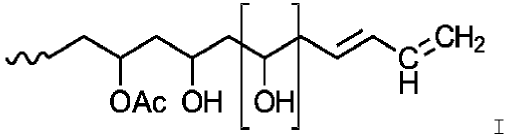 with n = 100-3000.

4. The impregnating agent according to claim 1, **characterized in that** the polyvinyl alcohol contains C-C double bonds in the side chains.

5. The impregnating agent according to one of the claims 1 - 4, **characterized in that**, as silane group-containing cross-linking agents, compounds of the general Formula II are used

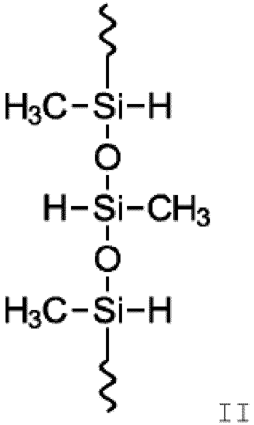

6. The impregnating agent according to one of the claims 1 - 5, **characterized in that**, as silicone compound containing olefinic C-C double bonds, compounds of the general Formula III are used

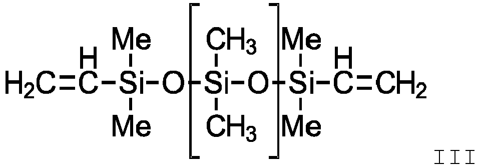

7. A method for impregnating cellulose-based material by the application of an impregnating agent, obtainable by the reaction of polyvinyl alcohol-containing olefinic C-C double bonds with a silane group-containing cross-linking agent and a silicone compound containing olefinic C-C double bonds.

8. The method according to claim 7, **characterized in that** Polyvinyl alcohol, containing olefinic C-C double bonds is applied on a cellulose-based material and subsequently is reacted with a silane group containing cross-linking agent and a silicone compound containing olefinic C-C double bonds.

9. The method according to claim 7 or 8, **characterized in that** the reaction is catalyzed by platinum, palladium or rhodium salts or complexes.

10. The method according to one of the preceding claims 7 to 9, **characterized in that** paper or cardboard is used as cellulose-based material.

## Revendications

1. Produit d'imprégnation susceptible d'être obtenu par transformation d'alcool polyvinylique contenant des doubles liaisons oléfiniques C-C avec un agent réticulant contenant des groupes silanes et un composé siliconé contenant des doubles liaisons oléfiniques C-C.

2. Produit d'imprégnation selon la revendication 1, **caractérisé en ce que** l'alcool polyvinylique contient des doubles liaisons oléfiniques C-C dans la chaîne fondamentale.

3. Produit d'imprégnation selon la revendication 1 ou 2, **caractérisé en ce qu'**en tant qu'alcool polyvinylique, on utilise des composés à doubles liaisons oléfiniques C-C de la formule générale I : 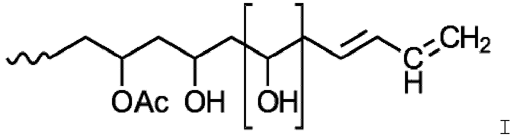 avec n = 100-3000.

4. Produit d'imprégnation selon la revendication 1, **caractérisé en ce que** l'alcool polyvinylique contient des doubles liaisons oléfiniques C-C dans des chaînes latérales.

5. Produit d'imprégnation selon l'une quelconque des revendications 1 - 4, **caractérisé en ce qu'**en tant qu'agent réticulant contenant des groupes silanes, on utilise des composés de la formule générale II :

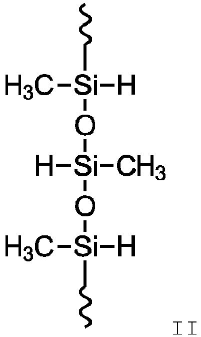

6. Produit d'imprégnation selon l'une quelconque des revendications 1 - 5, **caractérisé en ce qu'**en tant que composé siliconé contenant des doubles liaisons oléfiniques C-C, on utilise des composés de la formule générale III :

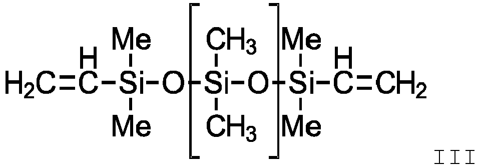

7. Procédé destiné à imprégner une matière à base de cellulose par application d'un produit d'imprégnation, susceptible d'être obtenu par transformation d'alcool polyvinylique contenant des doubles liaisons oléfiniques C-C avec un agent réticulant contenant des groupes silanes et un composé siliconé contenant des doubles liaisons oléfiniques C-C.

8. Procédé selon la revendication 7, **caractérisé en ce qu'**on applique l'alcool polyvinylique contenant des doubles liaisons oléfiniques C-C sur une matière à base de cellulose et on le transforme ensuite avec un agent réticulant contenant des groupes silanes et un composé siliconé contenant des doubles liaisons oléfiniques C-C.

9. Procédé selon la revendication 7 ou 8, **caractérisé en ce qu'**on catalyse la transformation par des sels ou des complexes de platine, de palladium ou de rhodium.

10. Procédé selon l'une quelconque des revendications 7 à 9, **caractérisé en ce qu'**en tant que matière à base de cellulose, on utilise du papier ou du carton.
